# EUROPÄISCHE PATENTANMELDUNG

(11) **EP 1 170 615 A2**
(43) Veröffentlichungstag der Anmeldung: **09.01.2002**
(21) Anmeldenummer: 01116131.2
(22) Anmeldetag: 03.07.2001
(51) Int. Cl.: G02B 6/44

(54) **Metallfreies, selbsttragendes optisches Kabel und Verfahren zur Montage des optischen Kabels**

(30) Priorität: 03.07.2000 DE 10032247
(71) Anmelder: CCS Technology, Inc., Wilmington, DE 19803 (US)
(72) Erfinder: Engel, Reinhard, Dr., 96271 Grub am Forst (DE)
(74) Vertreter: Epping Hermann & Fischer

(57) **Zusammenfassung**

Bei einem metallfreien, selbsttragenden optischen Luftkabel (OC1) ist mindestens ein langgestrecktes Feldsteuerelement (FE1) im Kunststoff-Kabelmantel (AM) derart vorgesehen, daß erst durch Eindrücken einer außen angebrachten Mastbefestigung (AS1) in die Außenoberfläche des Kabelmantels (AM) und gegebenenfalls durch Spannungsdurchschläge (SDU) im Betrieb eine elektrische Kontaktierung zwischen dem Feldsteuerelement (FE1) und der Mastbefestigung (AS1) bewirkt ist.

## Beschreibung

Metallfreies, selbsttragendes optisches Kabel und Verfahren zur Montage des optischen Kabels

Die vorliegende Erfindung betrifft ein metallfreies, selbsttragendes optisches Kabel mit einer Kabelseele und einem darüber aufgebrachten, elektrisch isolierenden Kunststoff-Kabelmantel für die Verwendung als Luftkabel im Feldbereich von Phasenseilen einer Hochspannungsfreileitung sowie ein Verfahren zur Montage des optischen Kabels in einer Freileitungstrasse.

Metallfreie, selbsttragende optische Kabel, welche zum Aufhängen an Masten in bestehenden Freileitungstrassen für Hochspannungsfreileitungen geeignet sind, werden auch als ADSS(All Dielectric Self-Supporting)-Kabel bezeichnet.

Zur Übertragung elektrischer Energie über weite Strecken und in großen Mengen werden üblicherweise Hochspannungs-Freileitungen eingesetzt. Beispielsweise in Deutschland sind Spannungsebenen in der Höchstspannungsebene von 230 kV oder 400 kV Effektivspannung bekannt. In Industrieländern besteht bezüglich derartiger Freileitungsnetze eine gute Infrastruktur.

Es ist deshalb wünschenswert, Lichtwellenleiter-Kabel zur Datenübertragung in die bestehenden Freileitungstrassen zu integrieren, denn zur Installation der optischen Kabel sind nur geringe, bauliche Maßnahmen erforderlich, während zugleich große Entfernungen überbrückbar sind. Die ADSS-Kabel können dabei im Feldraum zwischen den Phasenseilen zur Übertragung elektrischer Energie und dem Erdboden aufgehängt werden.

ADSS-Kabel sind besonders gut zur Integration in Hochspannungstrassen geeignet, da sie wegen ihres geringen Gewichts die Hochspannungsmasten nur geringfügig belasten.

Da es im allgemeinen nicht wünschenswert ist, zur Montage optischer Kabel in Hochspannungstrassen die betreffende Freileitung freizuschalten und zu erden, müssen die optischen Kabel sowie ihre Befestigungssysteme zur Befestigung am Mast so gestaltet sein, daß ohne Gefährdung des Montagepersonals eine Befestigung am Mast möglich ist.

Besonders in Höchstspannungsnetzen ab 400 kV verketteter Spannung führt das im normalen Betrieb der Leitung bestehende, hohe Potential zu einem hohen elektrischen Feld zwischen Phasenseilen und Erde sowie zwischen Phasenseilen und Mast. Werden nun optische Kabel, welche metallfrei und im wesentlichen nicht leitend sind, in das bestehende, elektrische Feld eingebracht, so führen die Streukapazitäten zwischen Phasenseilen, optischem Kabel, Erde und geerdetem Mast dazu, daß die optischen Kabel auf ein elektrisches Potential aufgeladen werden. Da dies zur Gefährdung von Montagepersonal beitragen kann, ist es erforderlich, die optischen Kabel am Mast zu erden. Dies führt jedoch dazu, daß sich entlang der Kabeloberfläche eine Spannungsverteilung einstellt, welche in der Mitte zwischen zwei Masten ihr Maximum hat und an den Erdungsstellen am Mast ein Minimum. Hierdurch kommt es zu Oberflächenentladungen entlang des Kabelmantels sowie zu Kriechströmen entlang des Kabelmantels, welche zu einer schnelleren Alterung des Kabelmantel-Materials beitragen. Besonders hohe Spannungsabfälle treten dabei am Übergang vom optischen Kabel zur Masterdung, welche üblicherweise als Metallspirale ausgeführt ist, auf.

Ein weiterer, bekannter Alterungsmechanismus von optischen Kabeln ist durch Verschmutzungen und Feuchtigkeit auf der Manteloberfläche bedingt. Beispielsweise nach Regenfällen können sich entlang des Kabelmantels ringförmige Mantelzonen, welche sehr kurz und trocken sind, mit feuchten Mantelzonen abwechseln. Aufgrund der verschiedenen Oberflächenleitfähigkeiten dieser Zonen und den benachbarten, voneinander getrennten Bereichen mit unterschiedlichem elektrischen Potential kann es, sobald die elektrische Feldstärke in den trokkenen Zonen die Durchschlagfeldstärke übersteigt, zu Oberflächenentladungen mit Beschädigungen der Manteloberfläche kommen. Dieser Mechanismus ist auch als Dry-Band Arcing bekannt.

Aus der Druckschrift DE 36 18 659 C2 ist ein metallfreies Luftkabel mit Lichtwellenleiteradern bekannt, bei dem ein elektrisch halbleitender Kabelmantel mit einem spezifischen Widerstand von 10² bis 10¹⁰ Ωcm vorgesehen ist. Zwar werden durch Verwendung eines halbleitenden Mantelmaterials Oberflächenentladungen verringert, aber da das Kabel kein Isolator ist, müssen bei der Installation des Kabels unter Hochspannung umfangreiche und aufwendige Sicherheitsmaßnahmen für die Monteure getroffen werden. Zudem sind Polymere mit einem Widerstand zwischen 10⁴ und 10⁵ Ωcm, wie sie gemäß der Druckschrift bevorzugt sind, technisch schwierig und aufwendig herzustellen.

Aus der Druckschrift EP 0 695 431 B1 ist weiterhin ein optisches Kabel mit einer oder mehreren optischen Fasern bekannt, bei dem entlang eines Teils des Kabels voneinander beabstandete, leitende Elemente vorgesehen sind, welche das Dry-Band Arcing verhindern sollen. Das Aufbringen derartiger leitender, voneinander isolierter Elemente ist sehr kostenintensiv in der Herstellung. Darüber hinaus muß zwischen den leitenden Elementen mit Oberflächenentladungen am Kabelmantel gerechnet werden, wenn die dort beschriebene Struktur aufgrund von Verschmutzungen oder Feuchtigkeit elektrisch unwirksam ist.

Aus der Druckschrift EP 0 214 480 B1 ist ein gattungsgemäßes, metallfreies selbsttragendes optisches Kabel für Hochspannungsfreileitungen bekannt, mit einer Kabelseele und einem die Kabelseele umgebenden Kabelmantel, wobei die Kabelseele schwach elektrisch leitend ausgebildet ist, so daß ihr spezifischer Widerstand zwischen 10⁵ und 10¹⁰ Ωcm liegt. Problematisch dabei ist aber, daß das elektrische Feld der Hochspannungsfreileitungen zu einem Stromfluß innerhalb des optischen Kabels zu den Erdungsvorrichtungen am Mast hin führt. Zudem kommt es aufgrund der kapazitiven Kopplung zwischen der halbleitenden Kabelseele und den als Befestigungs- und Erdungsvorrichtung am Mast vorgesehenen Abspannspiralen dazu, daß im dortigen Bereich höchster Feldstärke innere Teilentladungen im Kabelmantel entstehen, welche zu Durchschlägen führen können. Dies hat den Nachteil, daß das Kabel im Bereich höchster mechanischer Beanspruchung, nämlich an der Mastbefestigung, zusätzlich auch der höchsten elektrischen Beanspruchung unterworfen ist.

Aus der Druckschrift DE 35 44 085 C2 ist ein optisches Kabel bekannt, bei dem die beschriebene Problematik durch Auswahl eines Kabelmantel-Materials mit verbesserter Kriechstromfestigkeit gelöst werden soll. Dieses hat jedoch den Nachteil, daß derartige Mantelmaterialien zum einen sehr teuer sind und zum anderen selbst bei derartigen Kabeln bei Höchstspannungen von über 400 kV die Oberflächen-Teilentladungen so stark werden können, daß eine erwartete Lebensdauer von 20 Jahren nicht erreicht werden kann.

Aus der Druckschrift WO 95/16933 ist ein für gattungsgemäße Kabel geeignetes, lineares Halbleiter-Element angegeben, welches auf dem Kabelmantel oder zwischen zwei Kabelmantel-Schichten schraubenförmig angeordnet ist. Dabei ist als Material ein Widerstandsmaterial mit negativem Temperaturkoeffizient vorgesehen. Dieses weist neben den bereits bei Druckschrift EP 0 695 431 B1 beschriebenen Problemen den Nachteil auf, daß aufgrund der im Kabelmantel eingebetteten, halbleitenden Elemente und der dünneren wirksamen Isolierschicht die Durchschlagsfestigkeit reduziert ist.

Aufgabe der vorliegenden Erfindung ist es, das gattungsgemäße metallfreie, selbsttragende optische Kabel dahingehend weiterzubilden, daß es bezüglich der beschriebenen Alterungsmechanismen verbessert ist, sowie ein Verfahren zur Montage des optischen Kabels in einer Freileitungstrasse anzugeben.

Erfindungsgemäß wird die Aufgabe von einem gattungsgemäßen metallfreien, selbsttragenden optischen Kabel gelöst, bei dem mindestens ein langgestrecktes Feldsteuerelement im Inneren des Kabelmantels isoliert von dessen Oberfläche in einem derartigen Abstand von der Oberfläche vorgesehen ist, daß erst durch Eindrücken einer außen anzubringenden Mastbefestigung in die Außenoberfläche des Kabelmantels oder erst durch Eindrücken einer außen anzubringenden Mastbefestigung in die Außenoberfläche des Kabelmantels und Spannungsdurchschläge im Betrieb eine Kontaktierung zwischen dem Feldsteuerelement und der Mastbefestigung bewirkt ist, wobei der zwischen dem Feldsteuerelement und der Kabelseele liegende Mantelbereich und somit insgesamt eine ringsum geschlossene Kunststoff-Ummantelung um die Kabelseele bestehen bleibt.

Das langgestreckte Feldsteuerelement kann eine Leitfähigkeit aufweisen, die Feldstärkespitzen längs der Kabelmantel-Oberfläche und somit kabelschädigende Teilentladungen verhindert. Somit wird die Lebensdauer des Kabels erhöht. Ein weiterer Vorteil der beschriebenen Anordnung ist es, daß die Kabelseele bezüglich des Feldsteuerelementes in allen Betriebszuständen isoliert ist, wobei die Isolation sowohl elektrisch als auch gegen Feuchtigkeit wirksam ist. Dies wird dadurch erreicht, daß zwischen dem Feldsteuerelement und der Kabelseele eine ringsum geschlossene Kunststoff-Ummantelung um die Kabelseele bestehen bleibt. Hierdurch wird eine Schädigung des Kabels, insbesondere der Kabelseele, aufgrund von Feuchtigkeit und aufgrund von durch Feuchtigkeit bedingten Alterungserscheinungen wie Frost, Verrottung oder Pilzbefall verhindert.

Da bei der Montage des Kabels und dessen Befestigung an den Masten spannungsführender Hochspannungstrassen eine elektrisch isolierende Schicht des Kabelmantels das Feldsteuerelement umgibt, sind die Monteure vor Spannungsberührung des elektrisch aufgeladenen Feldsteuerelements und damit vor gesundheitlichen Gefahren geschützt.

Nach der Montage und im Betrieb schließlich stellt sich durch Aufbringen einer Mastbefestigung zur Befestigung des optischen Kabels am Mast sowie zu dessen Erdung eine leitende Verbindung des Feldsteuerelements mit den Spiraldrähten der Abspannspirale ein, oder zwischen Mastbefestigung und Feldsteuerelement besteht eine dünne, elektrisch isolierende Schicht mit definierter Durchschlagstrecke. Selbst wenn die äußere Isolationsschicht des Kabelmantels, nämlich diejenige, welche in Radialrichtung des Kabels außerhalb des Feldsteuerelements angeordnet ist, durch Anbringen der Mastbefestigung am Kabel oder durch nachfolgende elektrische Beanspruchung mit inneren Teilentladungen oder Durchschlägen zerstört wird, so unterbleibt dennoch eine Zerstörung des in Radialrichtung innerhalb des Feldsteuerelements angeordneten Kabelmantels. Somit werden weder tragende Elemente im Kabelinneren, beziehungsweise der Kabelseele, geschwächt, noch kann Feuchtigkeit zum Kabelinneren vordringen.

In einer vorteilhaften Ausführungsform der vorliegenden Erfindung weist die Kabelseele ein zentral angeordnetes Kunststoffröhrchen auf, das mit mindestens einem Lichtwellenleiter belegt ist. Hierdurch ist ein ausreichender Schutz vor mechanischen Einflüssen, Feuchtigkeit sowie elektrischer Isolation der Lichtwellenleiter mittels des Kunststoff-Kabelmantels gewährleistet.

Es können mehrere Kunststoffröhrchen vorgesehen sein, welche miteinander verseilt um ein zentrales Zugelement angeordnet sein können.

In einer weiteren, vorteilhaften Ausführungsform der vorliegenden Erfindung weist die Kabelseele außen ringsum das Kunststoffröhrchen mindestens eine Lage zugfester Elemente auf. Hierdurch ist es möglich, auch große Distanzen, beispielsweise 1000 Meter, mit dem beschriebenen optischen Kabel freitragend zu überbrücken, ohne daß die auftretenden Zugkräfte eine unzulässige Längung und damit verbundene Verschlechterung der optischen Eigenschaften der Lichtwellenleiter verursachen.

In einer weiteren, vorteilhaften Ausführungsform der vorliegenden Erfindung ist die Mastbefestigung durch eine Abspannspirale gebildet, die den Kabelmantel entlang einer vorgebbaren Teillänge schraubenförmig umfaßt. Hierdurch ist zum einen eine gleichmäßige Kraftverteilung der Zugkräfte auf eine vorgebbare Teillänge des Kabelmantels gewährleistet, zum anderen kann ein elektrischer Kontakt zwischen schraubenförmiger Abspannspirale und dem harten Feldsteuerelement durch Auflegen der Abspannspirale auf den Kabelmantel und Eindrücken der Spiraldrähte in den Mantel hergestellt werden.

In einer weiteren, vorteilhaften Ausführungsform der vorliegenden Erfindung ist die Mastbefestigung geerdet. Das Erden der Mastbefestigung ermöglicht im Zusammenhang mit der mechanischen Befestigung des Kabels mit der Mastbefestigung am Mast, daß eine Montage des Luftkabels auch bei anliegender Hochspannung ohne Gefährdung des Montagepersonals möglich ist, da auftretende Oberflächenströme sofort vom Kabelmantel in den geerdeten Mast abgeleitet werden.

In einer weiteren, vorteilhaften Ausführungsform der vorliegenden Erfindung erstreckt sich das Feldsteuerelement über die Gesamtlänge des Kabelmantels hinweg. Hierdurch können Feldstärkeüberhöhungen nicht nur an den besonders durchschlags- beziehungsweise oberflächenerosionsgefährdeten Kabelbereichen nahe der Mastbefestigung verhindert werden, sondern es können Feldstärkespitzen auf dem optischen Kabel beziehungsweise Linienspannungen entlang der gesamten Kabeloberfläche in Axialrichtung wirksam verhindert werden.

In einer weiteren, vorteilhaften Ausführungsform der vorliegenden Erfindung ist für das Feldsteuerelement ein elektrisch halbleitendes Material gewählt. Hierdurch wird die Lebensdauer des Kabels dadurch deutlich erhöht, daß Oberflächenerosionen aufgrund elektrischer Teilentladungen verhindert beziehungsweise reduziert sind.

Besonders vorteilhaft ist die Ausführung des Feldsteuerelementes mit einer radial nach außen hin spitz zulaufenden Querschnittsform sowie einer radial nach innen abgerundeten Querschnittsform. Die nach außen hin spitz zulaufende Querschnittsform des Feldsteuerelements hat den Vorteil, daß durch die Spitzenwirkung bedingte Feldüberhöhungen an der Spitze des Feldsteuerelementes durch den dort herrschenden sehr kleinen Radius dazu führen, daß, wenn Entladungen auftreten, diese zwischen Abspannspirale und Spitze des Feldsteuerelementes als innere Teilentladungen im Kabelmantel oder als Durchschläge stattfinden. Zum anderen erfüllt die radial nach außen spitz zulaufende Querschnittsform des Feldsteuerelements eine weitere, mechanische Funktion, da durch Anlegen der Abspannspirale an den Kabelmantel und durch die auftretenden Kräfte ein elektrischer Kontakt zwischen Feldsteuerelement und Abspannspirale durch Zerschneiden des Kabelmantels mit der Spitze hergestellt wird. Hierdurch ist in vorteilhafter Weise im Bereich der Abspannspiralen ein elektrischer Kontakt zwischen Feldsteuerelement und Abspannspirale hergestellt.

Bezüglich des Verfahrens wird die Aufgabe gelöst mit einem Verfahren zur Montage eines vorstehend beschriebenen optischen Kabels in einer Hochspannungs-Freileitungstrasse mit folgenden Verfahrensschritten:
- Elektrisch leitendes und mechanisch festes Anbringen der Mastbefestigung an einem Mast der Freileitungstrasse,
- Anbringen der Mastbefestigung am optischen Kabel,
- Eindrücken der Mastbefestigung in den Kabelmantel des optischen Kabels, so daß eine Vertiefung im eingedrückten Kabelmantel derart gebildet ist, daß der Abstand zwischen Feldsteuerelement und der Oberfläche des Kabelmantels verringert ist.

Das optische Kabel wird zunächst in die Freileitungstrasse eingebracht. Anschließend werden die Mastbefestigungen, vorzugsweise Abspannspiralen, am Mast befestigt und elektrisch leitfähig mit dem geerdeten Mast verbunden. Schließlich werden die Abspannspiralen um den Kabelmantel gelegt, so daß eine mechanisch feste Verbindung zwischen Abspannspiralen und optischem Kabel gewährleistet ist. Hierdurch ist eine größtmögliche Sicherheit des Montagepersonals gewährleistet.

Das Eindrücken der Abspannspiralen in den Kabelmantel kann dazu führen, daß Hohlräume im Kabelmantel bezüglich ihres Volumens verringert sind.

Die Mastbefestigung kann aus mehreren Abspannspiralen, die in einer Ebene um den Kabelmantel angeordnet sind und ineinandergreifen, gebildet sein.

Es können unterschiedliche Typen von Abspannspiralen vorgesehen sein, beispielsweise Haltespiralen, die eine Tragfunktion erfüllen, und Zugspiralen, die zum Abspannen des optischen Kabels dienen. Abspannspiralen können in Abständen von zwei Kilometern vorgesehen sein.

Weitere Einzelheiten der Erfindung sind in den Unteransprüchen angegeben.

Die Erfindung wird nachfolgend an mehreren Ausführungsbeispielen anhand der Zeichnungen näher erläutert. Es zeigen:
- Figur 1: einen Querschnitt durch ein metallfreies, selbsttragendes optisches Kabel mit einem Feldsteuerelement und eine lose aufliegende Abspannspirale,
- Figur 2: das optische Kabel gemäß Figur 1 nach Anbringen der Mastbefestigung,
- Figur 3: die Anordnung des optischen Kabels in einer Hochspannungs-Freileitungsübertragungsstrecke,
- Figur 4: ein Ausführungsbeispiel des optischen Kabels mit einem dreieckförmigen Feldsteuerelement,
- Figur 5: ein Ausführungsbeispiel eines optischen Kabels mit einem gebogenen Feldsteuerelement,
- Figur 6: einen Längsschnitt durch ein optisches Kabel mit einer Abspannspirale,
- Figur 7: eine Spannungsverteilung entlang dem Kabelmantel,
- Figur 8: einen detaillierten Längsschnitt durch ein optisches Kabel mit Abspannspirale gemäß Figur 6,
- Figur 9: einen Ausschnitt aus Figur 8, und
- Figuren 10 und 12: den Schädigungsmechanismus Dry-Band Arcing.

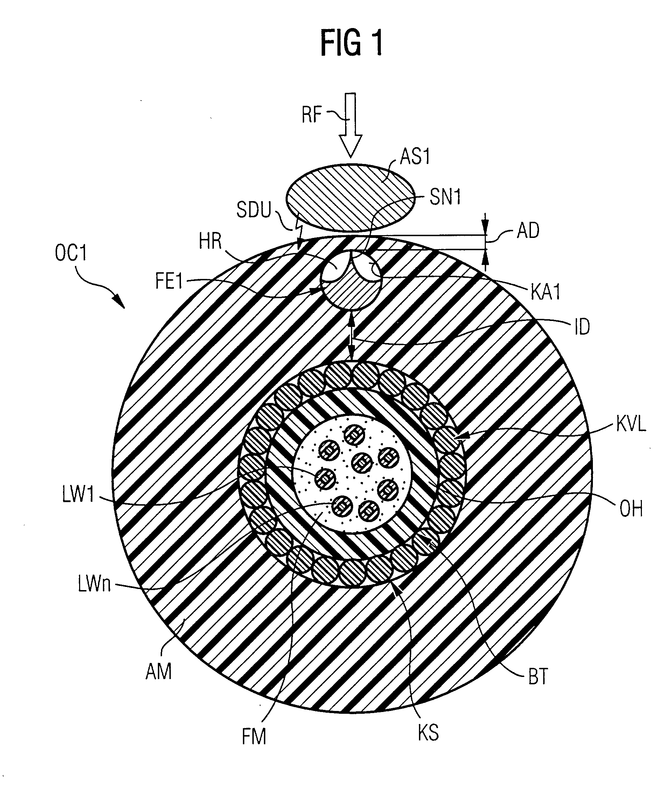

Figur 1 zeigt ein metallfreies, selbsttragendes optisches Kabel OC1 mit einer Kabelseele KS und einem darüber aufgebrachten Kunststoff-Kabelmantel AM. Der Kunststoff-Kabelmantel AM weist ein langgestrecktes Feldsteuerelement FE1 auf, welches eine radial nach außen spitz zulaufende Querschnittsform sowie eine radial nach innen abgerundete Querschnittsform hat.

Der innere Abstand ID des Feldsteuerelements von der Kabelseele KS ist so gewählt, daß Teilentladungen und Feuchtigkeit sicher von der Kabelseele abgehalten werden, selbst wenn der äußere Abstand AD zwischen Feldsteuerelement FE1 und lose auf das optische Kabel OC1 aufgelegter Abspannspirale AS1 durch Spannungsdurchschläge SDU oder durch Eindrücken der Abspannspirale AS1 in den Kabelmantel AM durch äußere Kräfte RF reduziert oder auf Null gebracht ist.

Das Feldsteuerelement FE1 ist in einer Kammer KA1 angeordnet. Dabei füllt das Feldsteuerelement FE1 die Kammer KA1 vor dem Aufbringen der Mastbefestigung beziehungsweise des Abspannelements AS1 lediglich teilweise aus, so daß mindestens ein Hohlraum HR frei bleibt. Die Kabelseele KS weist mehrere Lichtwellenleiter LW1 bis LWn auf, welche in einem Kunststoffröhrchen OH angeordnet und von einer Schutzhülle BT (buffer tube) umgeben sind. Um das Kunststoffröhrchen OH herum sind Kevlar-Fäden zur Bildung einer Lage zugfester Elemente KVL angeordnet. Zwischen den Lichtwellenleitern LW1 bis LWn ist innerhalb des Kunststoffröhrchens OH ein Füllmaterial FM angebracht.

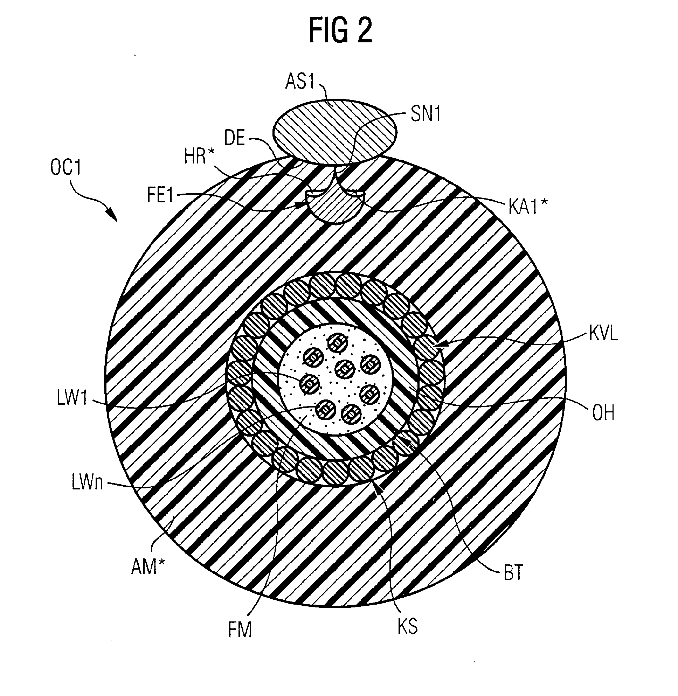

Wenn nun das Abspannelement AS1 durch Einwirkung von Kräften, welche durch die üblichen Zugkräfte sowie durch das Auflegen weiterer Spiraldrähte auftreten können oder durch Spannungsdurchschläge verursacht sind, in elektrischen Kontakt mit dem Feldsteuerelement FE1 tritt, so wird in Mastnähe eine elektrisch leitende Verbindung des Feldsteuerelements FE1 mit dem geerdeten Mast beziehungsweise der Abspannspirale AS1 hergestellt. Dieser Zustand ist in Figur 2 in einem Querschnitt durch das optische Kabel OC1 sowie durch die Abspannspirale AS1 dargestellt. Dabei ist zwischen der Schneide SN1 des Feldsteuerelements FE1 und der Abspannspirale AS1 unter Bildung einer Verformung DE im Kunststoff-Kabelmantel AM* eine elektrisch leitende Verbindung hergestellt. Der Hohlraum HR der Kammer KA1 aus Figur 1 ist nach Eindrücken der Mastbefestigung beziehungsweise Abspannspirale AS1 in seinem Volumen deutlich verringert, so daß ein kleinerer Hohlraum HR* in einer verformten Kammer KA1* gebildet ist. Somit ist sichergestellt, daß nach Anbringen der Abspannspirale AS1 an das optische Kabel OC1 selbst bei auftretenden, elektrischen Entladungen oder Durchschlägen im äußeren Kabelmantel, das heißt zwischen Feldsteuerelement FE1 und Abspannspirale AS1 im Mastbereich zwar in einem "Opferbereich" der äußeren Mantelschicht eine Perforation derselben erfolgen kann, dennoch aber in allen Fällen die innere Mantelschicht unversehrt bleibt, so daß kein Wasser beziehungsweise keine Feuchtigkeit in den Bereich der die Lichtwellenleiter LW1 bis LWn aufweisenden Kabelseele vordringen kann. Hierdurch wird eine beschleunigte Alterung beziehungsweise Zerstörung des optischen Kabels OC1 wirksam verhindert. Elektrische Teilentladungen sowie Spannungsdurchschläge SDU im äußeren Kabelmantel im Bereich zwischen Feldsteuerelement FE1 und Abspannspirale AS1 führen vielmehr dazu, daß die Leitfähigkeit des elektrischen Kontakts zwischen Feldsteuerelement FE1 und Abspannspirale AS1 durch Perforation der äußeren Mantelschicht AD des Kabelmantels AM immer besser wird, so daß die Teilentladungen im äußeren Bereich des Kabelmantels immer weiter abnehmen.

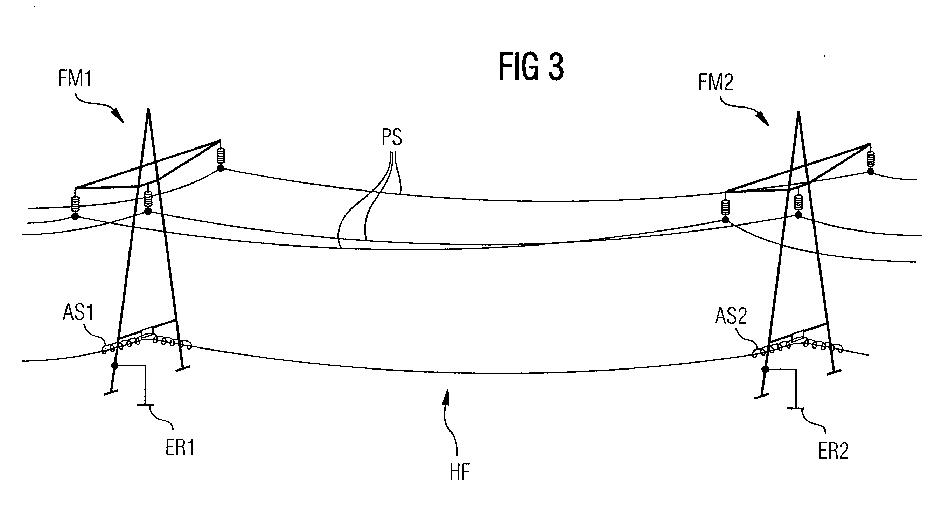

Figur 3 zeigt die prinzipielle Anordnung des optischen Kabels OC1 im Feldbereich von Phasenseilen PS einer Hochspannungsfreileitung HF. Dabei sind Gittermasten FM1, FM2 vorgesehen, an denen die Phasenseile PS, welche die Hochspannung führen, über Isolatoren bevorzugt an Mast-Traversen befestigt sind. Das optische Kabel OC1 ist mittels Abspannspiralen AS1, AS2 an den geerdeten Masten FM1, FM2 elektrisch leitend angebracht. Der Mast selbst ist dabei mittels Erdungseinrichtungen ER1, ER2 geerdet. Da bei der Montage des optischen Kabels OC1 üblicherweise kein Freischalten der Hochspannungstrasse und Erden derselben möglich beziehungsweise gewünscht ist, erfolgt die Montage des optischen Kabels OC1 dadurch für die Monteure weitgehend gefahrlos, daß das Feldsteuerelement FE1 durch eine äußere Mantelschicht AD gegen Berührung isoliert ist. Bis zur Kontaktierung des Feldsteuerelements FE1 durch Auflegen der Abspannspirale AS1, AS2 ist das optische Kabel OC1 somit elektrisch isoliert.

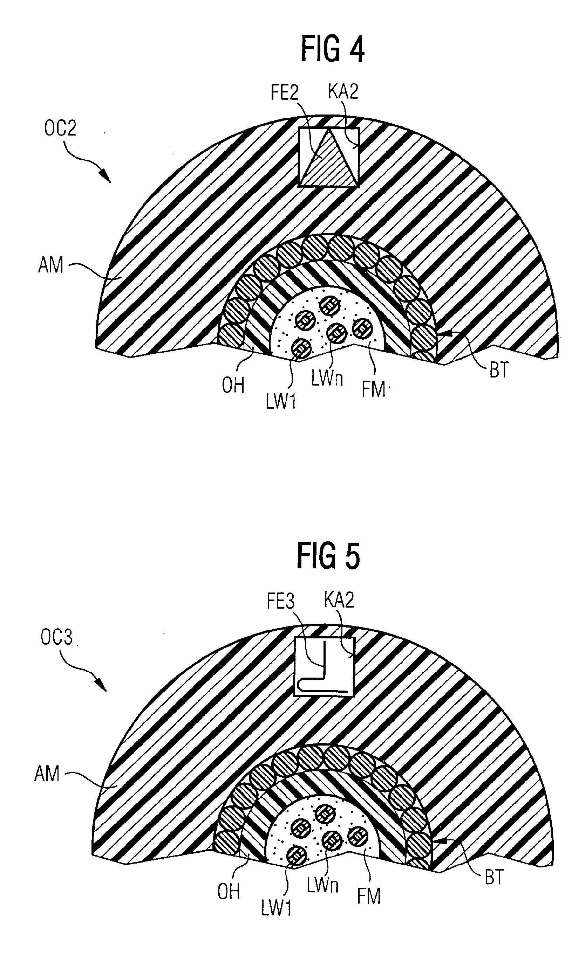

Figur 4 zeigt ein Feldsteuerelement von einem zweiten Typ FE2, welches in einem zweiten optischen Kabel OC2 im Kunststoff-Kabelmantel AM angeordnet ist. Das zweite Feldsteuerelement FE2 ist in einer zweiten Kammer KA2 untergebracht. Es weist einen dreieckförmigen Querschnitt auf, wobei eine Spitze des Dreiecks radial nach außen zeigt. Die Anordnung einer Abspannspirale AS1 erfolgt wie für Figuren 1 und 2 erläutert. Auch beim zweiten Feldsteuerelement gemäß Figur 4 weist die zweite Kammer KA2 einen Hohlraum auf. Das optische Kabel OC2 gemäß Figur 4 zeichnet sich dadurch aus, daß ein Feldsteuerelement FE2 mit dreieckförmigem Querschnitt besonders einfach herstellbar ist.

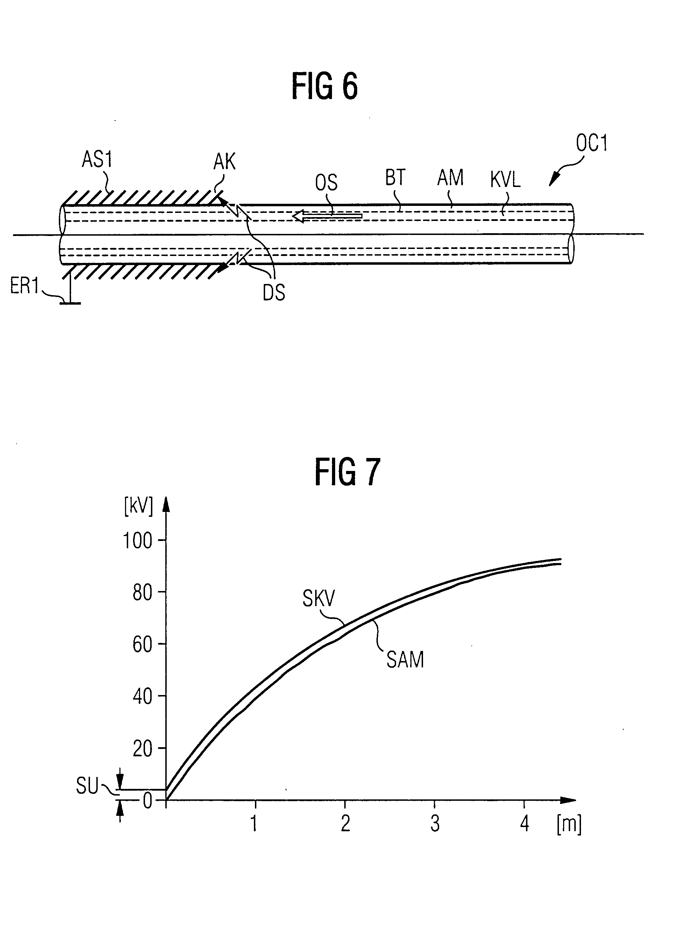

Figur 5 zeigt ein drittes Ausführungsbeispiel eines optischen Kabels OC3 in einem Querschnitt, bei welchem ein drittes Feldsteuerelement FE3 in einer Kammer KA2 mit quadratischem Querschnitt angeordnet ist. Das dritte Feldsteuerelement FE3 weist eine radial nach außen weisende Spitze auf, welche zum einen zur Erzeugung einer Spitzenwirkung bezüglich des elektrischen Feldes und zum anderen zur mechanischen Wirkung der verbesserten Durchschneidung des äußeren Kabelmantels dient. Das dritte Feldsteuerelement FE3 ist in besonders einfacher Weise aus einem gebogenen Blech herstellbar.

Da sich die optischen Kabel OC1 bis OC3 gemäß Figur 1 bis Figur 5 jeweils wie ein Faden in Längsrichtung durch das optische Kabel OC1 bis OC3 ziehen, sind derartige optische Kabel in einfacher Weise herstellbar.

Figur 6 zeigt ein optisches Kabel OC1 mit einer angelegten Abspannspirale AS1, welche mit einer Erdungsvorrichtung ER1 geerdet ist. Das optische Kabel OC1 weist einen Kunststoff-Kabelmantel AM auf, welcher eine Kevlar-Schicht KVL zur Verbesserung der mechanischen Zugfestigkeit des Kabels umschließt, welcher wiederum um die Kabelseele herum angeordnet ist.

Figur 7 zeigt die Spannungsverläufe entlang der Kevlar-Fäden SKV sowie entlang des äußeren Kunststoff-Kabelmantels SAM in Abhängigkeit von der Kabellänge des optischen Kabels OC1. Der Nullpunkt der Weglänge ist dabei am Ende der Abspannspirale AS1, wo eine Kante AK gebildet ist, eingezeichnet. Dort ist gerade der größte Spannungsunterschied SU zwischen Kevlar-Schicht KVL und äußerem Kabelmantel AM vorhanden, so daß dort die größte Wahrscheinlichkeit für das Auftreten von Durchschlägen DS vorherrscht. Diese Durchschläge im Kabelmantel treten bevorzugt in radialer Richtung in Umgebung der Abspannspirale beziehungsweise unter der Abspannspirale AS1 auf.

Figuren 6 und 7 dienen lediglich zur Erläuterung der Oberflächenstrom- OS und Durchschlagsverhalten des optischen Kabels OC1. Beim optischen Kabel OC1 gemäß Figur 6 ist kein Feldsteuerelement FE1 eingezeichnet.

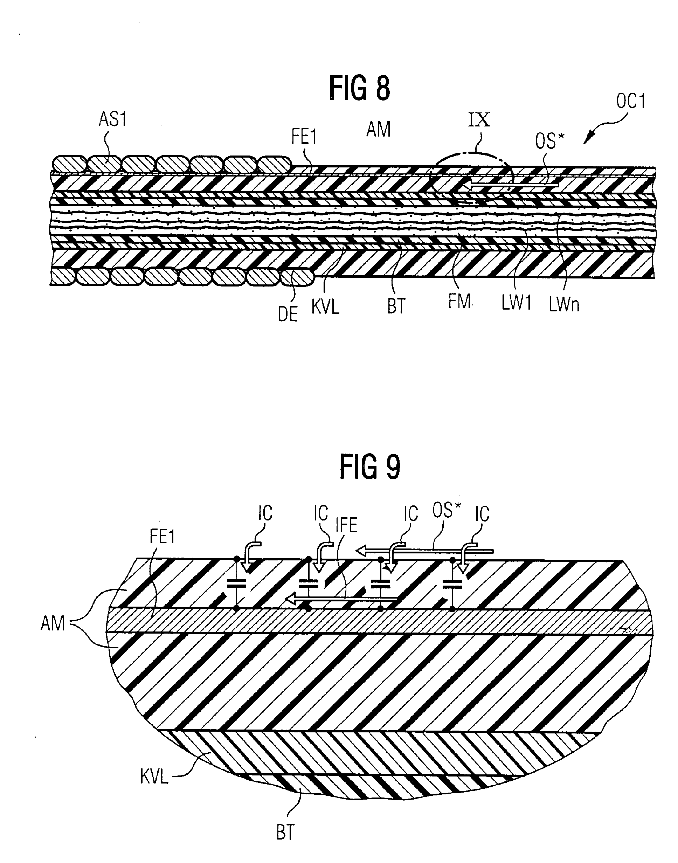

Figur 8 hingegen zeigt das optische Kabel OC1 mit Feldsteuerelement FE1 im Kabelmantel AM. Die mittels der Erdungseinrichtung ER1 geerdete Abspannspirale AS1 umschließt den Kabelmantel AM in einem Teilbereich des optischen Kabels, wobei sich, wie in Figur 2 erläutert, die Abspannspirale AS1 in den Kunststoff-Kabelmantel AM eindrückt, so daß dort Reduzierungen des Kabelmantel-Umfangs DE entstehen. Die durch die kapazitive Kopplung des optischen Kabels OC1 mit den Phasenseilen einer Freileitung entstehenden Oberflächenströme OS* werden nunmehr kapazitiv in das Feldsteuerelement FE1 abgeführt und können über die Abspannspirale AS1, welche mit den Feldsteuerelementen FE1 in Kontakt stehen kann, in eine Erdungseinrichtung ER1 abgeführt werden. Im Kabelinneren ist die Schutzhülle BT mit den von Füllmaterial FM umgebenen Lichtwellenleitern LW1 bis LWn angeordnet.

Figur 9 zeigt einen Ausschnitt aus Figur 8 im Detail. Oberflächenströme OS* entlang der Kabeloberfläche führen zu kapazitiven Strömen IC durch die äußere Schicht des Kabelmantels AM von der Kabelmanteloberfläche zum Feldsteuerelement FE1 hin. Diese bilden einen Strom IFE im Feldsteuerelement FE1.

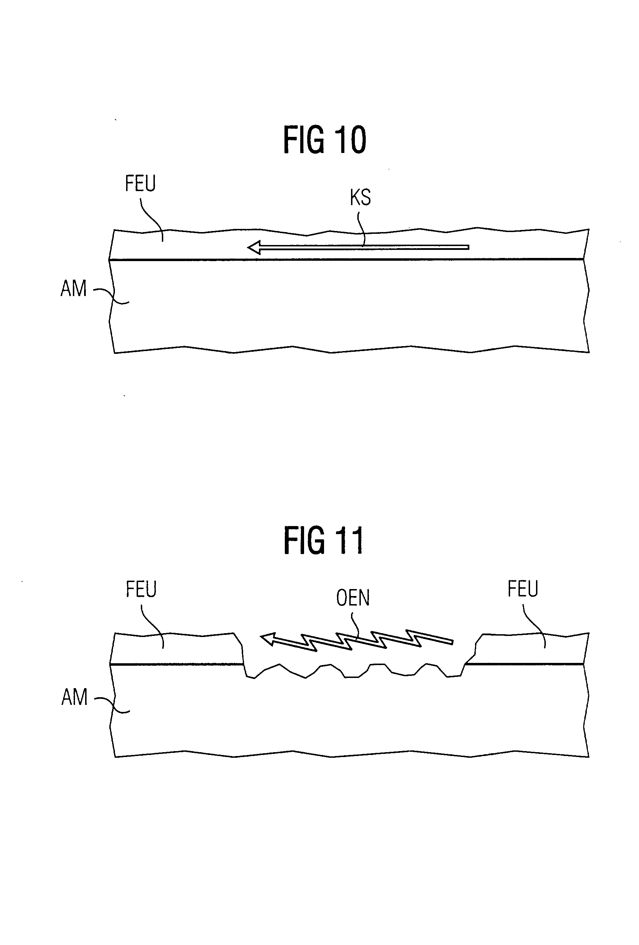

Figuren 10 und 11 schließlich erläutern das Prinzip des schädlichen Dry-Band Arcing, welches von vorliegender Erfindung wirksam verhindert wird. Gemäß Figur 10 ist Feuchtigkeit FEU außen am Kabelmantel AM vorhanden, so daß Kriechströme KS entlang der Kabel-Oberfläche fließen. Diese Oberflächen-Kriechströme KS werden durch Spannungen des Hochspannungs-Feldes auf der Oberfläche des optischen Kabels induziert. Beim Trocknen des Kabels ist es wahrscheinlich, daß bestimmte Gebiete an der Kabeloberfläche schneller trocknen als andere, so daß zwischen feuchten Gebieten Trockenzonen entstehen. Aufgrund sich einstellender Potentialdifferenzen zwischen benachbarten, durch Trockenzonen voneinander getrennten feuchten Gebieten FEU an der Oberfläche des Kabelmantels AM entstehen, wie in Figur 11 dargestellt, Oberflächenentladungen OEN, welche mit Hitzeentwicklung verbunden sind, so daß der Kabelmantel sukzessive zerstört wird. Auch dieser Mechanismus wird durch vorliegendes Prinzip wirksam verhindert, da Oberflächenströme in den Kabelmantel beziehungsweise das dort angeordnete Feldsteuerelement FE1 abgeführt werden können.

## Patentansprüche

1. Metallfreies, selbsttragendes optisches Kabel (OC1) mit einer Kabelseele (KS) und einem darüber aufgebrachten, elektrisch isolierenden Kunststoff-Kabelmantel (AM) für die Verwendung als Luftkabel im Feldbereich von Phasenseilen (PS) einer Hochspannungsfreileitung (HF),
**dadurch gekennzeichnet, daß**
mindestens ein langgestrecktes Feldsteuerelement (FE1) im Inneren des Kabelmantels (AM) isoliert von dessen Oberfläche in derartigem Abstand von der Oberfläche (AD) vorgesehen ist, daß erst durch Eindrücken einer außen anzubringenden Mastbefestigung (AS1) in die Außenoberfläche des Kabelmantels (AM) oder erst durch Eindrücken einer außen anzubringenden Mastbefestigung (AS1) in die Außenoberfläche des Kabelmantels (AM) und Spannungsdurchschläge (SDU) im Betrieb eine Kontaktierung zwischen dem Feldsteuerelement (FE1) und der Mastbefestigung (AS1) bewirkt ist, wobei der zwischen dem Feldsteuerelement (FE1) und der Kabelseele (KS) liegende Mantelbereich und somit insgesamt eine ringsum geschlossene Kunststoff-Ummantelung um die Kabelseele (KS) bestehen bleibt.

2. Optisches Kabel nach Anspruch 1,
**dadurch gekennzeichnet, daß**
die Kabelseele (KS) ein zentral angeordnetes Kunststoffröhrchen (OH) aufweist, das mit mindestens einem Lichtwellenleiter (LW1 bis LWn) belegt ist.

3. Optisches Kabel nach Anspruch 2,
**dadurch gekennzeichnet, daß**
die Kabelseele (KS) außen rings um das Kunststoffröhrchen (OH) mindestens eine Lage zugfester Elemente (KVL) aufweist.

4. Optisches Übertragungselement nach einem der Ansprüche 1 bis 3,
**dadurch gekennzeichnet, daß**
die Mastbefestigung (AS1) durch eine Abspannspirale gebildet ist, die den Kabelmantel (AM) entlang einer vorgebbaren Teillänge schraubenförmig umfaßt.

5. Optisches Kabel nach einem der Ansprüche 1 bis 4,
**dadurch gekennzeichnet, daß**
die Mastbefestigung (AS1) geerdet ist.

6. Optisches Kabel nach einem der Ansprüche 1 bis 5,
**dadurch gekennzeichnet, daß**
sich das Feldsteuerelement (FE1) über die Gesamtlänge des Kabelmantels (AM) hinweg erstreckt.

7. Optisches Kabel nach einem der Ansprüche 1 bis 6,
**dadurch gekennzeichnet, daß**
für das Feldsteuerelement (FE1) ein elektrisch schwach leitendes Material gewählt ist.

8. Optisches Kabel nach einem der Ansprüche 1 bis 7,
**dadurch gekennzeichnet, daß**
das Feldsteuerelement (FE1) einen spezifischen elektrischen Widerstand von 1 kΩcm bis 1 MΩcm aufweist.

9. Optisches Kabel nach einem der Ansprüche 1 bis 8,
**dadurch gekennzeichnet, daß**
das Feldsteuerelement (FE1) in einer Kammer (KA1) im Kunststoffmaterial des Kabelmantels (AM) untergebracht ist.

10. Optisches Kabel nach Anspruch 9,
**dadurch gekennzeichnet, daß**
das Feldsteuerelement (FE1) die Kammer (KA1) vor dem Aufbringen der Mastbefestigung (KS1) lediglich teilweise ausfüllt, so daß mindestens ein Hohlraum (HR) frei bleibt.

11. Optisches Kabel nach einem der Ansprüche 9 oder 10,
**dadurch gekennzeichnet, daß**
die Kammer (KA1) mit dem Feldsteuerelement (FE1) in radialer Richtung bezogen auf die Zentralachse (ZA) der Kabelseele (KS) in der äußeren Schichthälfte des Kabelmantels (AM) vorgesehen ist.

12. Optisches Kabel nach einem der Ansprüche 9 bis 11,
**dadurch gekennzeichnet, daß**
sich das Feldsteuerelement (FE1) in der Kammer (KA1) radial nach innen hin am Rand der Kammer (KA1) abstützt.

13. Optisches Kabel nach einem der Ansprüche 1 bis 12,
**dadurch gekennzeichnet, daß**
das Feldsteuerelement (FE1) eine radial nach außen spitz zulaufende Querschnittsform aufweist.

14. Optisches Kabel nach einem der Ansprüche 1 bis 13,
**dadurch gekennzeichnet, daß**
das Feldsteuerelement (FE1) radial nach innen hin eine abgerundete Querschnittsform aufweist.

15. Optisches Kabel nach einem der Ansprüche 1 bis 14,
**dadurch gekennzeichnet, daß**
der zwischen dem Feldsteuerelement (FE1) und der Kabelseele (KS) liegende Mantelbereich (ID) des Kabelmantels (AM) eine derartige Schichtdicke aufweist, daß die Kabelseele (KS) auch bei zerstörter äußerer Mantelschicht weitgehend mechanisch oder elektrisch isolierend geschützt ist.

16. Optisches Kabel nach einem der Ansprüche 1 bis 15,
**dadurch gekennzeichnet, daß**
vor Anbringen der Mastbefestigung (AS1) am Kabelmantel (AM) der Abstand (AD) des Feldsteuerelemts (FE1) von der Oberfläche des Kabelmantels in einem Bereich von 0,1 mm bis 1 mm liegt.

17. Optisches Kabel nach einem der Ansprüche 1 bis 16,
**dadurch gekennzeichnet, daß**
der Abstand (ID) zwischen dem Feldsteuerelement (FE1) und der Kabelseele (KS) mindestens 1 mm beträgt.

18. Verfahren zur Montage eines optischen Kabels nach einem der Ansprüche 1 bis 17 in einer Hochspannungs-Freileitungstrasse mit folgenden Verfahrensschritten:
- Elektrisch leitendes und mechanisch festes Anbringen der Mastbefestigung (AS1) an einem Mast der Freileitungstrasse,
- Anbringen der Mastbefestigung (AS1) am optischen Kabel (OC1),
- Eindrücken der Mastbefestigung (AS1) in den Kabelmantel (AM) des optischen Kabels (OC1), so daß eine Vertiefung (DE) im eingedrückten Kabelmantel (AM*) derart gebildet ist, daß der Abstand (AD) zwischen Feldsteuerelement (FE1) und der Oberfläche des Kabelmantels (AM) verringert ist.

19. Verfahren zur Montage eines optischen Kabels nach Anspruch 18,
**dadurch gekennzeichnet, daß**
die Mastbefestigung (AS1) derart in den Kabelmantel (AM) des optischen Kabels (OC1) eingedrückt wird, daß ein elektrischer Kontakt zwischen Feldsteuerelement (FE1) und Mastbefestigung (AS1) gebildet wird.
